# EUROPÄISCHE PATENTSCHRIFT

(11) **EP 0 395 910 B1**
(45) Veröffentlichungstag und Bekanntmachung des Hinweises auf die Patenterteilung: **21.09.1994**
(21) Anmeldenummer: 90106636.5
(22) Anmeldetag: 06.04.1990
(51) Int. Cl.: G02B 5/10

(54) **Spiegel zur Veränderung der geometrischen Gestalt eines Lichtbündels**
Mirror for modification of the optical configuration of a light beam
Miroir pour la modification de la configuration géométrique d'un faisceau de lumière

(30) Priorität: 29.04.1989 DE 3914275
(43) Veröffentlichungstag der Anmeldung: 07.11.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Hohberg, Gerhard, Dr., D-7080 Aalen-Dewangen (DE); Becker, Kurt, Dr., D-7082 Oberkochen (DE)

(56) Entgegenhaltungen:
- EP-A- 0 080 597
- EP-A- 0 324 518
- EP-A- 0 392 387
- GB-A- 2 062 282
- PATENT ABSTRACTS OF JAPAN, vol. 12, no. 310 (E-648)(3157) 23. August 1988 & JP A 63077178
- PATENT ABSTRACTS OF JAPAN, vol. 12, no. 185 (P-710)(3032) 31. Mai 1988 & JP A 62293528

## Beschreibung

Die Erfindung betrifft eine optische Anordnung zur Veränderung der geometrischen Gestalt eines Lichtbündels nach dem Oberbegriff des Anspruchs 1 und eine Verwendung dafür.

Spiegel zur Veränderung der geometrischen Gestalt eines Lichtbündels sind weit verbreitet. Schwierig ist die Erzeugung eins Strahlungsquerschnittes, welcher eine im wesentlichen rechteckigen bis linienförmigen Querschnitt aufweist, innerhalb dessen die Intensität einen vorwählbaren Wert hat. Solche Strahlungsquerschnitte werden insbesondere zur Oberflächenbehandlung mit Lasern benötigt, um nur ein wesentliches Anwendungsgebiet zu nennen.

Bei der EP-A 0 392 387 (ein Dokument im Sinne von Art. 54(3) EPÜ) wird das Merkmal des Oberbegriffs, daß die von den Segmenten reflektierten Bereiche des Lichtbündels auf ein und denselben Teilbereich einer Achse gelenkt werden, daß der Strahlungsquerschnitt also linienförmig ist, dadurch erreicht, daß die Segmente rotationssymmetrisch zu der Achse ausgeführt, also gekrümmt sind.

Ein aus JP-A-63-77 178 bekannter Laserreflektor hat ebene Spiegelsegmente, die ein Paraboloid umhüllen, und erzeugt ein rechteckiges bis quadratisches fokussiertes Bild. Alle Spiegelsegmente werden vom Laserstrahl zugleich getroffen und fokussieren auf den gleichen Fleck.

Aus EP-A 0 324 518 ist es bekannt, zur Umwandlung zwischen symmetrischen und unsymmetrischen Strahlquerschnitten eine Linse mit einem Gitter zu kombinieren.

Aufgabe der Erfindung ist es, mit nur zwei optischen Abbildungen einem Lichtbündel mit beliebigem Strahlquerschnitt einen zweidimensionalen Strahlquerschnitt zu geben, innerhalb dessen die Intensität in mindestens einer Richtung vorgegebene Intensitätsverteilung aufweist.

Diese Aufgabe wird erfindungsgemäß gemäß dem kennzeichnenden Teil des ersten Patentanspruches dadurch gelöst, daß im Strahlengang des Lichtbündels (72, 82) ein Gitter (74, 85) angebracht ist.

Zur Erzeugung einer zweidimensionalen Intensitätsverteilung, die in einer Richtung eine konstante Intensität und in der dazu senkrechten Richtung eine beliebig vorwählbare Intensitätsverteilung aufweist, wird der Laserstrahl durch eine geeignete Gitterstruktur in dazu senkrechter Richtung aufgefächert. Dabei befindet sich das vorzugsweise reflektierende Gitter vorteilhafterweise zwischen dem Spiegel zur Veränderung der geometrischen Gestalt des Lichtbündels und der Arbeitsebene.

Spiegel der vorab beschriebenen Art lassen sich insbesondere sehr vorteilhaft bei der Oberflächenbehandlung von Werkstücken mit streifenweiser Bestrahlung durch einen Laser verwenden.

Die Erfindung wird nachstehend in beispielhafter Weise anhand der Figuren näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt
- Fig. 1: eine erfindungsgemäße Spiegel-Gitteranordnung;
- Fig. 2: eine Anordnung, bei dem das Gitter zwischen Arbeitsebene und Spiegel angeordnet ist.

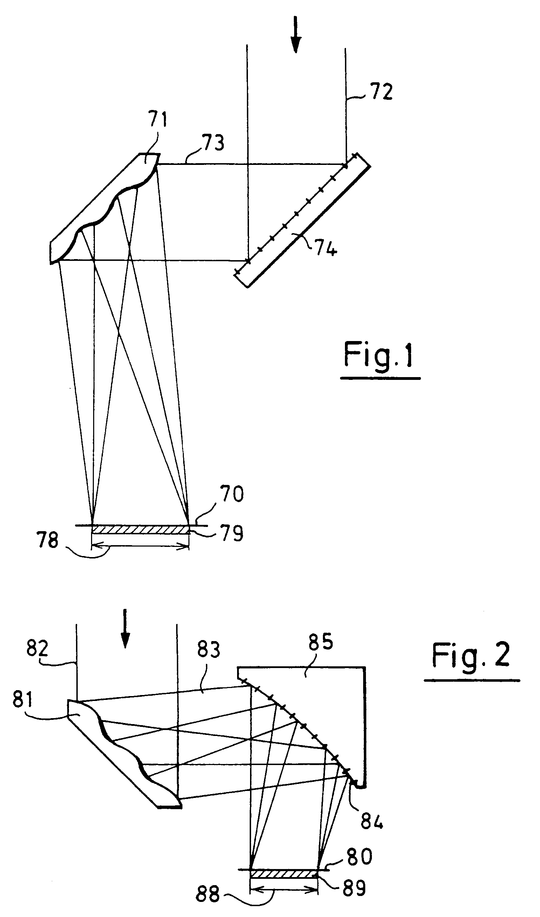

In der Fig. 1 soll eine Umwandlung eines Laserstrahls (72) in eine zweidimensionale Intensitätsverteilung auf der Oberfläche (70) eines Werkstücks (79) erfolgen. Der Spiegel (71) kann nur eine konstante linienförmige Intensitätsverteilung erzeugen. Dabei darf der Laserstrahl (72) eine weitgehend beliebige Modenstruktur besitzen.

Um eine zweidimensionale Intensitätsverteilung mit dem Spiegel (71) zu erzielen, muß die optische Anordnung um ein Gitter (74) erweitert werden. Dieses Gitter (74) fächert mit seiner Gitterstruktur den Laserstrahl (72) vor dem Spiegel (71) in senkrechter Richtung bezogen auf die Gitterstruktur auf. Das Gitter (74) ist ein ebenes Reflexionsgitter und kann mit einer NC-Maschine durch Fräsen oder Hobeln problemlos gefertigt werden. Die Ausführung des Gitters (74) als Reflexionsgitter hat den Vorteil, daß hohe Strahlungsintensitäten auf das Werk stück (79) gelenkt und das Gitter (74) und der Spiegel (71) im Betrieb gekühlt werden können.

Durch die vorteilhafte getrennte Realisierung der beiden optischen Komponenten (Spiegel 71 und Gitter 74) ist nicht nur die Fertigung problemlos. Durch einen Austausch des Gitters (74) kann bei einer geeigneten Gitterstruktur (d.h. der Wellenlänge des Laserstrahles angepaßte, ausgewählte Furchenstruktur, usw.) die zweidimensionale Intensitätsverteilung in einer Richtung eine konstante und in der dazu senkrechten Richtung eine beliebig vorwählbare, schnell änderbare Intensitätsverteilung aufweisen.

Man muß aber beachten, daß die "Abbildungen" des Gitters (74) und des Spiegels (71) nicht unabhängig voneinander sind. Befindet sich das Gitter (74) vor dem Spiegel (71), so werden die vom Gitter (74) abgelenkten Laserstrahlen (73) vom Spiegel (71) nur näherungsweise korrekt abgebildet. Dieses Problem kann man dadurch umgehen, daß in der optischen Anordnung das Gitter (85) nach dem Spiegel (81) im optischen Strahlengang angeordnet ist. Diese in Fig. 2 gezeigte Anordnung erlaubt eine sehr genaue Abbildung des Laserstrahls (82) auf die Oberfläche (80) des Werkstücks (89).

Die vom Spiegel (81) reflektierten Strahlen (83) werden auf der gekrümmten Oberfläche (84) des Gitters (85), welches auch hier ein Reflexionsgitter ist, in zur Gitterstruktur senkrechten Richtung aufgefächert. Dadurch wird im Arbeitsbereich eine zweidimensionale Intensitätsverteilung erzeugt, die in einer Richtung eine konstante (durch den Spiegel (81)) und in der dazu senkrechten Richtung eine beliebig vorwählbare (durch das Gitter (85)) Intensitätsverteilung aufweist.

Die gekrümmte Oberfläche des Reflektionsgitters (85) hat fertigungstechnische Vorteile (Drehen statt Fräsen oder Hobeln), außerdem kann bei einem Austausch des Gitters (85) sowohl die Intensitätsverteilung auf der Oberfläche (80) des Werkstücks (89) als auch gleichzeitig der Arbeitsabstand verändert werden.

Zwar kann auch das Gitter auf dem Spiegel (81) aufgebracht sein, doch verzichtet man dann auf die oben beschriebenen Vorteile bei dem modularen Aufbau der optischen Anordnung.

## Patentansprüche

1. Optische Anordnung zur Veränderung der geometrischen Gestalt eines Lichtbündels mit einem Spiegel (71, 81) mit mehreren spiegelnden Bereichen, der aus mehreren streifenförmigen Segmenten aufgebaut ist, wobei die Größe des Lichtbündels so gewählt ist, daß das umzuformende Lichtbündel (72, 82) gleichzeitig auf mehrere der Segmente fällt und alle Segmente so geformt und ausgerichtet sind, daß die von den Segmenten reflektierten Bereiche des Lichtbündels auf ein und denselben linienförmigen Fokus gelenkt werden, dadurch gekennzeichnet, daß im Strahlengang des Lichtbündels (72, 82) ein Gitter (74, 85) so angebracht ist, daß es mit seiner Gitterstruktur das Lichtbündel vor dem Spiegel in senkrechter Richtung bezogen auf die Gitterstruktur auffächert.

2. Spiegel nach Anspruch 1, dadurch gekennzeichnet, daß der Spiegel (71, 81) und das Gitter (74, 85) getrennt realisiert sind.

3. Spiegel nach einem der Ansprüche 1 oder 2, dadurch gekennzeichnet, daß das Gitter (74, 85) ein Reflexionsgitter ist.

4. Spiegel nach einem der Ansprüche 1-3, dadurch gekennzeichnet, daß das Gitter (85) eine gekrümmte Oberfläche besitzt.

5. Spiegel nach einem der Ansprüche 1-4, dadurch gekennzeichnet, daß das Gitter (85) hinter dem Spiegel (81) angebracht ist.

6. Verwendung einer optischen Anordnung zur Veränderung der geometrischen Gestalt eines Lichtbündels gemäß den Ansprüchen 1 bis 5 zur Oberflächenbehandlung mit streifenweiser Bestrahlung durch einen Laser.

## Claims

1. Optical arrangement for changing the geometric form of a light beam with a mirror (71, 81) with a plurality of strip-like segments, where the size of the light beam (72, 82) is determined so that the light beam (72, 82) to be changed in its form simultaneously impinges upon a plurality of the segments and all segments are formed and aligned so as to cause the parts of the light beam being reflected by the segments to be directed onto exactly one linear focus, characterized in that a grating (74, 85) is arranged in the light path of the light bundle (72, 82) such that it disperses the light bundle with its grating structure in a direction orthogonal to its grating structure before reaching the mirror.

2. Mirror according to claim 1 characterized in that the mirror (71, 81) and the grating (74, 85) are incorporated separately.

3. Mirror according to one of the claims 1 or 2 characterized in that the grating (74, 85) is a reflection grating.

4. Mirror according to one of the claims 1-3 characterized in that the grating (85) has a curved surface.

5. Mirror according to one of the claims 1-4 characterized in that the grating (85) is arranged downstream of the mirror (81).

6. Use of an arrangement for changing the geometric form of a light bundle according to the claims 1 to 5 for surface treatment with stripwise illumination by a laser.

## Revendications

1. Dispositif optique servant à modifier la configuration géométrique d'un faisceau lumineux, comprenant un miroir (71, 81) qui possède plusieurs régions réfléchissantes, et qui est composé de plusieurs segments en forme de bandes, la dimension du faisceau lumineux étant choisie de manière que le faisceau lumineux (72, 82) a transformer tombe simultanément sur plusieurs des segments et tous les segments étant conformés et orientés de manière que les régions du faisceau lumineux réfléchies par les segments soient renvoyées sur un seul et même foyer linéaire, caractérisés en ce qu'un réseau (74, 85) est intercalé sur le trajet des rayons du faisceau lumineux (72, 82) de telle manière à étaler le faisceau lumineux dans la direction perpendiculaire à la structure de réseau en amont du miroir sous l'effet de sa structure de réseau.

2. Miroir selon la revendication 1, caractérisé en ce que le miroir (71, 81) et le réseau (74, 85) sont réalisés sous la forme d'éléments séparés.

3. Miroir selon une des revendications 1 et 2, caractérisé en ce que le réseau (74, 85) est un réseau réfléchissant.

4. Miroir selon une des revendications 1 à 3, caractérisé en ce que le réseau (85) possède une surface courbe.

5. Miroir selon une des revendications 1 à 4, caractérisé en ce que le réseau (85) est placé en aval du miroir (81).

6. Utilisation d'un dispositif optique servant à modifier la configuration géométrique d'un faisceau lumineux selon les revendications 1 à 5, pour le traitement de surfaces par irradiation par bandes au moyen d'un laser.
